# EUROPEAN PATENT APPLICATION

(11) **EP 4 443 920 A1**
(43) Date of publication of application: **09.10.2024**
(21) Application number: 22897371.5
(22) Date of filing: 28.09.2022
(51) Int. Cl.: H04W 4/40, H04W 76/14

(54) **COMMUNICATION METHOD, AND TERMINAL**

(30) Priority: 29.11.2021 CN 202111437489
(71) Applicant: Datang Mobile Communications Equipment Co., Ltd., Beijing 100085 (CN)
(72) Inventor: ZHAI, Haitao, Beijing 100085 (CN); ZHAO, Yali, Beijing 100085 (CN); XU, Hao, Beijing 100085 (CN); ZHANG, Huiying, Beijing 100085 (CN)
(74) Representative: Cabinet Nony
(86) International application number: PCT/CN2022/122181
(87) International publication number: WO 2023/093285

(57) **Abstract**

The present application relates to the technical field of wireless communications. Provided are a communication method, and a terminal. In the present application, a first terminal sets a first PC5-S message of a unicast type, which message is sent to a second terminal, to be a broadcast type or a multicast type, such that the second terminal can establish a corresponding packet data convergence protocol (PDCP) receiving entity, a radio link control (RLC) receiving entity and a logical channel for the PC5-S message, or after determining that a transmission message is a PC5-S message of a unicast type that is sent by a new terminal, the second terminal processes the transmission message as a message of a broadcast type or a multicast type, and establishes a corresponding PDCP receiving entity, an RLC receiving entity and a logical channel, thereby facilitating the solving of the problem of the second terminal not being able to establish a corresponding PDCP receiving entity, an RLC receiving entity and a logical channel for the unicast message, which is conducive for the terminal to receive the PC5-S message.

## Description

### Cross-Reference To Related Applications

The present disclosure claims priority to Chinese Patent Application No. 202111437489.5, filed to the China National Intellectual Property Administration on November 29, 2021 and entitled "COMMUNICATION METHOD, AND TERMINAL", the entire content of which is incorporated herein by reference.

### Technical Field

The present disclosure relates to the technical field of wireless communications, in particular to a communication method, and a terminal.

### Background

An Internet of Vehicles message transmission solution is mainly studied in Vehicle to Everything (V2X). In a V2X technology, when user equipment (UE) initiates a service, a sending end may establish a corresponding packet data convergence protocol (PDCP) sending entity, radio link control (RLC) and logical channel through triggering of a high layer to complete sending of a PC5-S message.

As for a receiving end, the receiving end may establish a corresponding PDCP receiving entity, RLC receiving and logical channel when receiving a new layer-2 connection address for the first time only when the PC5-S message is a broadcast message or a multicast message.

### Summary

Embodiments of the present disclosure provide a communication method, and a terminal. When a sending terminal sends a PC5-S message of a unicast type for the first time, a receiving terminal may also complete receiving of the PC5-S message.

In a first aspect, an embodiment of the present disclosure provides a communication method, applied to a first terminal and including:
determining a first PC5-S message of a unicast type sent to a second terminal;
setting a propagation type of the PC5-S message to be a broadcast type or a multicast type in the case that the propagation type of the PC5-S message is a unicast message; and
sending the PC5-S message.

According to the communication method, and the terminal provided by the embodiments of the present disclosure, before sending the first PC5-S message of the unicast type to the second terminal, the first terminal may set the propagation type of the PC5-S message to be the broadcast type or the multicast type and then send the PC5-S message, such that the second terminal may establish a corresponding PDCP receiving entity, RLC receiving entity and logical channel for the PC5-S message after receiving the PC5-S message. Therefore, the communication method provided by the embodiment of the present disclosure facilitates the solving of the problem of the second terminal not being able to establish the corresponding PDCP receiving entity, RLC receiving entity and logical channel for the unicast message, which is conducive for the terminal to receiving the PC5-S message.

In an optional embodiment, the setting a propagation type of the PC5-S message to be a broadcast type or a multicast type includes:
indicating the propagation type of the PC5-S message to be the broadcast type or the multicast type by a high layer; the high layer being an application layer or a V2X layer; and
setting an information type in a sidelink control information (SCI) domain corresponding to the PC5-S message to be the broadcast type or the multicast type through a medium access control (MAC) layer based on the indication of the high layer.

In an optional embodiment, the setting a propagation type of a to-be-sent message to be a broadcast type or a multicast type includes:
setting the propagation type of the PC5-S message to be the broadcast type or the multicast type through a radio resource control (RRC) layer in the case that the RRC layer receives a message sending request of the high layer; the message sending request indicating to send the PC5-S message to the second terminal; and the high layer being an application layer or a V2X layer.

In an optional embodiment, the method further includes:
establishing a PDCP sending entity, a PDCP receiving entity, an RLC sending entity, an RLC receiving entity, a sending logical channel and a receiving logical channel through the RRC layer after the RRC layer receives the message sending request of the high layer.

In an optional embodiment, the first PC5-S message of the unicast type includes a PC5-S message sent by the first terminal to the second terminal for the first time by using a new layer-2 unicast connection address; the PC5-S message being sidelink establishment request information, sidelink authentication request information or sidelink security mode control command information.

In a second aspect, an embodiment of the present disclosure provides a communication method, applied to a second terminal and including:
receiving a transmission message sent by a first terminal; and
processing the transmission message as a message of a broadcast type or a multicast type in the case of determining that the transmission message is a PC5-S message of a unicast type that is sent by a new terminal, and establishing a corresponding PDCP receiving entity, RLC receiving entity and logical channel; the new terminal being a direct communication terminal that sends the transmission message to the second terminal for the first time, or a direct communication terminal that does not establish a PC-S unicast connection with the second terminal, or a direct communication terminal that sends the transmission message to the second terminal for the first time by using a new layer-2 unicast connection address.

According to the communication method, and the terminal provided by the embodiments of the present disclosure, after determining that the transmission message is the PC5-S message of the unicast type that is sent by the new terminal, the second terminal processes the transmission message as the message of the broadcast type or the multicast type, and establishes the corresponding PDCP receiving entity, RLC receiving entity and logical channel. Therefore, the communication method provided by the embodiment of the present disclosure facilitates the solving of the problem of the second terminal not being able to establish the corresponding PDCP receiving entity, RLC receiving entity and logical channel for a unicast message, which is conducive for the second terminal to receiving the unicast message.

In an optional embodiment, whether the transmission message is the PC5-S message of the unicast type that is sent by the new terminal is determined through the following manner:
determining that the transmission message is the PC5-S message of the unicast type that is sent by the new terminal in the case that the transmission message meets a set condition; the set condition including one or a combination of the following conditions:
the transmission message being a unicast message;
a logical channel ID (LCID) of the transmission message being 0 or 1 or 2;
the transmission message being a message that is sent to the second terminal for the first time by using a new layer-2 unicast connection address;
a destination address ID of the transmission message being the same as an address ID of the second terminal; and
a current moment being within valid time corresponding to the transmission message.

In an optional embodiment, the transmission message is determined as the message that is sent by the first terminal to the second terminal for the first time through the following manner:
determining that the transmission message is the message that is sent by the first terminal to the second terminal for the first time in the case that an ID of the first terminal is not saved in the second terminal, and/or, the second terminal does not receive a message sent by the first terminal within set time.

In an optional embodiment, the processing the transmission message as a message of a broadcast type or a multicast type in the case of determining that the transmission message is a PC5-S message of a unicast type that is sent by a new terminal, and establishing a corresponding PDCP receiving entity, RLC receiving entity and logical channel includes:
establishing the logical channel through an MAC layer in the case of determining through the MAC layer that the transmission message is the PC5-S message of the unicast type that is sent by the new terminal, and sending the transmission message to an RLC layer;
establishing the RLC receiving entity through the RLC layer, and sending the transmission message to a PDCP layer through the RLC layer; and
establishing the PDCP receiving entity through the PDCP layer.

In an optional embodiment, the establishing the RLC receiving entity through the RLC layer includes:
establishing the RLC receiving entity through the RLC layer in the case of determining that the transmission message meets an RCL set condition through the RLC layer;
the RLC set condition including one or a combination of the following conditions:
   the transmission message being a unicast message;
   an LCID of the transmission message being 0 or 1 or 2;
   the transmission message being a first transmission message between the new layer-2 unicast connection address used by the first terminal and a layer-2 unicast connection address of the second terminal; and
   the transmission message having no corresponding RLC receiving entity.

In an optional embodiment, the establishing the RLC receiving entity through the RLC layer includes one or a combination of the following actions:
establishing the RLC receiving entity through the RLC layer;
initializing a state variable of the RLC receiving entity through the RLC layer; and
completing receiving of the transmission message through the RLC layer.

In an optional embodiment, the establishing the PDCP receiving entity through the PDCP layer includes:
establishing the PDCP receiving entity through the PDCP layer in the case of determining that the transmission message meets a PDCP set condition through the PDCP layer; and
sending the transmission message to a high layer through the PDCP layer; the high layer being an application layer or a V2X layer;
the PDCP set condition including one or a combination of the following conditions:
   the transmission message being a unicast message;
   a logical channel ID (LCID) of the transmission message being 0 or 1 or 2;
   the transmission message being a first transmission message between the new layer-2 unicast connection address used by the first terminal and a layer-2 unicast connection address of the second terminal; and
   the transmission message having no corresponding PDCP receiving entity.

In an optional embodiment, the establishing the PDCP receiving entity through the PDCP layer includes one or a combination of the following actions:
establishing the PDCP receiving entity through the PDCP layer;
initializing a state variable of the PDCP receiving entity through the PDCP layer; and
completing receiving of the transmission message through the PDCP layer.

In an optional embodiment, the processing the transmission message as a message of a broadcast type or a multicast type in the case of determining that the transmission message is a PC5-S message of a unicast type that is sent by a new terminal, and establishing a corresponding PDCP receiving entity, RLC receiving entity and logical channel includes:
processing the transmission message as the message of the broadcast type or the multicast type in the case of determining through the MAC layer that the transmission message is the PC5-S message of the unicast type that is sent by the new terminal, establishing the logical channel through the MAC layer, and sending indication information to a radio resource control (RRC) layer; and
establishing the PDCP receiving entity and the RLC receiving entity through the RRC layer based on the indication information.

In an optional embodiment, the method further includes:
setting a propagation type of the PC5-S message to be the broadcast type or the multicast type through the RRC layer in the case that a message sending request indicates to send the PC5-S message of the unicast type to the first terminal after the RRC layer receives the message sending request of the high layer; the high layer being the application layer or the V2X layer.

In an optional embodiment, the method further includes:
establishing a PDCP sending entity, a PDCP receiving entity, an RLC sending entity, an RLC receiving entity, a sending logical channel and a receiving logical channel through the RRC layer in the case that a message sending request indicates to send the PC5-S message of the unicast type to the first terminal after the RRC layer receives the message sending request of the high layer.

In a third aspect, an embodiment of the present disclosure provides a communication method, applied to a second terminal and including:
receiving a transmission message sent by a first terminal; and
sending an MAC PDU obtained after decoding the transmission message to disassembling and demultiplexing entities through an MAC layer and to an RLC layer in the case of determining that the transmission message meets the following conditions;
wherein the conditions include:
   the transmission message being a unicast message;
   the transmission message being a PC5-S message; and
   the transmission message being a message that is sent by the first terminal to the second terminal for the first time.

According to the communication method, and the terminal provided by the embodiments of the present disclosure, after determining that the transmission message is a PC5-S message of a unicast type that is sent by the first terminal for the first time, the second terminal sends the MAC PDU obtained after decoding the transmission message to the disassembling and demultiplexing entities through the MAC layer and to the RLC layer. Therefore, the communication method provided by the embodiment of the present disclosure is conducive for the second terminal to receiving the PC5-S message of the unicast type that is sent by the first terminal for the first time.

In an optional embodiment, the transmission message is determined as the PC5-S message through the following manner:
determining that the transmission message is the PC5-S message in the case that a logical channel ID of the transmission message is 0 or 1 or 2.

In an optional embodiment, the transmission message is determined as the message that is sent by the first terminal to the second terminal for the first time through the following manner:
determining that the transmission message is the message that is sent by the first terminal to the second terminal for the first time in the case that an ID of the first terminal is not saved in the second terminal, and/or, the second terminal does not receive a message sent by the first terminal within set time.

In an optional embodiment, the condition further includes:
a destination address ID of the transmission message being the same as an address ID of the second terminal.

In an optional embodiment, the method further includes:
establishing an RLC receiving entity in the case that the transmission message has no corresponding RLC receiving entity, and sending the transmission message to a PDCP layer through the RLC layer.

In an optional embodiment, the establishing an RLC receiving entity includes one or a combination of the following actions:
establishing the RLC receiving entity through the RLC layer;
initializing a state variable of the RLC receiving entity through the RLC layer; and
completing receiving of the transmission message through the RLC layer.

In an optional embodiment, the method further includes:
establishing a PDCP receiving entity in the case that the transmission message has no corresponding PDCP receiving entity.

In an optional embodiment, the establishing a PDCP receiving entity includes one or a combination of the following actions:
establishing the PDCP receiving entity through the PDCP layer;
initializing a state variable of the PDCP receiving entity through the PDCP layer; and
completing receiving of the transmission message through the PDCP layer.

In an optional embodiment, the method further includes:
sending the transmission message to a high layer through the PDCP layer; the high layer being an application layer or a V2X layer.

In a fourth aspect, an embodiment of the present disclosure provides a terminal, including:
a first setting unit, determining a first PC5-S message of a unicast type sent to a second terminal; and setting a propagation type of the PC5-S message to be a broadcast type or a multicast type in the case that the propagation type of the PC5-S message is a unicast message; and
a sending unit, sending the PC5-S message.

In a fifth aspect, an embodiment of the present disclosure provides a terminal, including: a memory, a transceiver and a processor;
the memory being configured to store computer instructions;
the transceiver being configured to transceive data under control of the processor; and
the processor being configured to read a computer program in the memory and perform the method in the first aspect.

In a sixth aspect, an embodiment of the present disclosure provides a terminal, including:
a receiving unit, receiving a transmission message sent by a first terminal; and
an establishment unit, processing the transmission message as a message of a broadcast type or a multicast type in the case of determining that the transmission message is a PC5-S message of a unicast type that is sent by a new terminal, and establishing a corresponding PDCP receiving entity, RLC receiving entity and logical channel; the new terminal being a direct communication terminal that sends the transmission message to a second terminal for the first time, or a direct communication terminal that does not establish a PC-S unicast connection with the second terminal, or a direct communication terminal that sends the transmission message to the second terminal for the first time by using a new layer-2 unicast connection address.

In a seventh aspect, an embodiment of the present disclosure provides a terminal, including:
a receiving unit, receiving a transmission message sent by a first terminal; and
an establishment unit, sending an MAC PDU obtained after decoding the transmission message to disassembling and demultiplexing entities through an MAC layer and to an RLC layer in the case of determining that the transmission message meets the following conditions;
wherein the conditions include:
   the transmission message being a unicast message;
   the transmission message being a PC5-S message; and
   the transmission message being a message that is sent by the first terminal to a second terminal for the first time.

In an eighth aspect, an embodiment of the present disclosure provides a terminal, including: a memory, a transceiver and a processor;
the memory being configured to store computer instructions;
the transceiver being configured to transceive data under control of the processor; and
the processor being configured to read a computer program in the memory and perform the method in the second aspect or the third aspect.

In a ninth aspect, an embodiment of the present disclosure provides a computer-readable storage medium, storing computer instructions, the computer instructions, when performed by a processor, implementing any method in the first aspect, the second aspect and the third aspect.

Technical effects brought by any implementation in the fourth aspect to the ninth aspect may refer to technical effects brought by the corresponding implementations in the first aspect, the second aspect and the third aspect, which are not described in detail here.

### Brief Description of Figures

In order to more clearly describe technical solutions in embodiments of the present disclosure or in the prior art, the accompanying drawings needed for the description in the embodiments or in the prior art will be briefly introduced below. Apparently, the accompanying drawings in the following description are only some embodiments of the present disclosure. Those ordinarily skilled in the art may also obtain other accompanying drawings according to these accompanying drawings without making creative work.
FIG. 1 is a schematic structural diagram of a communication system suitable for an embodiment of the present disclosure.
FIG. 2 is a schematic flowchart of interaction of a communication method provided by an embodiment of the present disclosure.
FIG. 3 is a diagram of an application scene of sending unicast sidelink establishment request information to a second terminal by a first terminal in the prior art.
FIG. 4 is a diagram of an application scene of sending unicast sidelink authentication request information to a second terminal by a first terminal in the prior art.
FIG. 5 is a diagram of an application scene of sending unicast sidelink security mode control command information to a second terminal by a first terminal in the prior art.
FIG. 6 is a schematic flowchart of interaction of another communication method provided by an embodiment of the present disclosure.
FIG. 7 is a schematic flowchart of a communication method provided by an embodiment of the present disclosure.
FIG. 8 is a schematic flowchart of a communication method provided by an embodiment of the present disclosure.
FIG. 9 is a schematic flowchart of a communication method provided by an embodiment of the present disclosure.
FIG. 10 is a structural block diagram of a first terminal provided by an embodiment of the present disclosure.
FIG. 11 is a structural block diagram of a second terminal provided by an embodiment of the present disclosure.
FIG. 12 is a structural block diagram of another second terminal provided by an embodiment of the present disclosure.
FIG. 13 is a structural block diagram of another second terminal provided by an embodiment of the present disclosure.
FIG. 14 is a schematic structural diagram of a terminal device provided by an embodiment of the present disclosure.
FIG. 15 is a schematic structural diagram of a terminal device provided by an embodiment of the present disclosure.

### Detailed Description

Specific implementations of the present disclosure are described in detail below with reference to accompanying drawings. It is to be understood that specific implementations described here are merely for describing and explaining the present disclosure instead of limiting the present disclosure.

It is to be noted that "first" and "second" in the embodiments of the present disclosure are used to distinguish similar objects, but are not used to describe a specific sequence or sequential order. "And/or" in the embodiments of the present disclosure describes an association relationship between associated objects and represents that there may be three relationships, for example, A and/or B, which represents that merely A exists, both A and B exist, and merely B exists. A character "/" generally represents an "or" relationship between associated objects before and after the character.

A network architecture and a service scene described in the embodiments of the present disclosure are intended to describe the technical solutions of the embodiments of the present disclosure more clearly but do not constitute a limitation on the technical solutions provided by the embodiments of the present disclosure, and those ordinarily skilled in the art may know that with evolution of a network architecture and emergence of a new service scene, the technical solutions provided by the embodiments of the present disclosure are also applicable to similar technical problems.

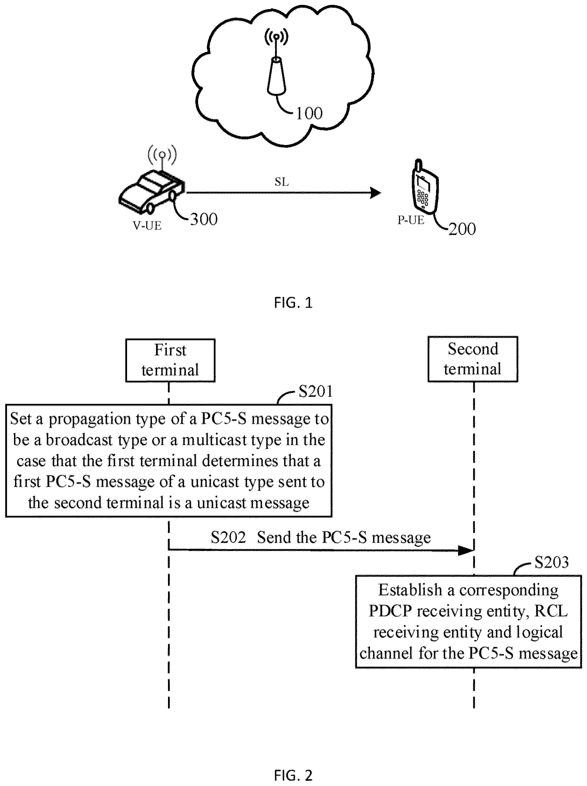

FIG. 1 is a schematic structural diagram of a communication network suitable for an embodiment of the present disclosure. The communication network may be a V2X network, or a part in the V2X network. The V2X network includes communication modes such as Vehicle to Vehicle (V2V), Vehicle to Pedestrian (V2P), Vehicle to Infrastructure (V2I) and Vehicle to Network (V2N). One end of the V2P communication may be Person-User Equipment (P-UE), the other end thereof may be Vehicle-User Equipment (V-UE), for example, P-UE 200 and V-UE 300 shown in FIG. 1. A network-side device 100 may also be included in the communication network. Both the P-UE 200 and the V-UE 300 may be connected with the network-side device 100 through a wireless network.

The network-side device 100 is a device providing a wireless communication function for the terminal, which includes but is not limited to: gNB in 5G, a radio network controller (RNC), a node B (NB), a base station controller (BSC), a base transceiver station (BTS), a home base station (for example, home evolved nodeB, or home node B (HNB)), a baseband unit (BBU), a transmitting and receiving point (TRP), a transmitting point (TP), a mobile switching center, etc. The network-side device 100 may also be a device providing the wireless communication function for the terminal in another communication system that possibly emerges in the future.

The P-UE 200 may be a device with the wireless communication function and may be a mobile phone, a pad, a computer with a wireless transceiving function, a virtual reality (VR) terminal, an augmented reality (AR) terminal, a wireless terminal in an industrial control, etc. The V-UE 300 may be a vehicle terminal in self driving, etc. Both the P-UE 200 and the V-UE 300 may provide speech and/or data connectivity for a user, has a wireless connection function and may be connected to a wireless modem, etc. The P-UE 200 and the V-UE 300 may communicate with one or more core networks via the network-side device 100.

In a V2X technology, when UE initiates a service, a sending end may establish a corresponding PDCP sending entity, RLC and logical channel through triggering of a high layer, and completes sending of a PC5-S message; but a receiving end may establish a corresponding PDCP receiving entity, RLC receiving and logical channel when receiving a new layer-2 connection address for the first time only when the PC5-S message is a broadcast message or a multicast message.

Based on this, embodiments of the present disclosure provide a communication method, and a terminal, before sending a first PC5-S message of a unicast type to a second terminal, a first terminal may set a propagation type of the PC5-S message to be a broadcast type or a multicast type and then send the PC5-S message to the second terminal; and the second terminal may establish a corresponding PDCP receiving entity, RLC receiving entity and logical channel for the PC5-S message after receiving the PC5-S message. It can help the second terminal to establish the corresponding PDCP receiving entity, RLC receiving entity and logical channel for the unicast message and then complete receiving of a PC5-S unicast message.

FIG. 2 shows a flowchart of interaction of a communication method provided by an embodiment of the present disclosure. The method is performed by the first terminal and the second terminal. As shown in FIG. 2, the method includes the following steps.

Step S201: a propagation type of the PC5-S message is set to be a broadcast type or a multicast type in the case that the first terminal determines that a first PC5-S message of a unicast type sent to the second terminal is a unicast message.

The PC5-S message refers to a signaling message sent between two terminals in a process of establishing a sidelink connection. After establishing the sidelink, a message of sending data between the two terminals may be called a PC5-RRC message.

In an optional implementation, the first PC5-S message of the unicast type includes a PC5-S message sent by the first terminal to the second terminal for the first time by using a new layer-2 unicast connection address; wherein the PC5-S message may be sidelink establishment request information, sidelink authentication request information or sidelink security mode control command information.

In an optional implementation, the first terminal may indicate the propagation type of the PC5-S message to be the broadcast type or the multicast type through a high layer. The high layer of the first terminal may be an application layer or a V2X layer of the first terminal. Based on the indication of the high layer, the first terminal may set an information type in a sidelink control information (SCI) domain corresponding to the PC5-S message to be the broadcast type or the multicast type through a medium access control (MAC) layer.

Step S202: the first terminal sends the PC5-S message to the second terminal.

Step S203: the second terminal establishes a corresponding PDCP receiving entity, RCL receiving entity and logical channel for the PC5-S message.

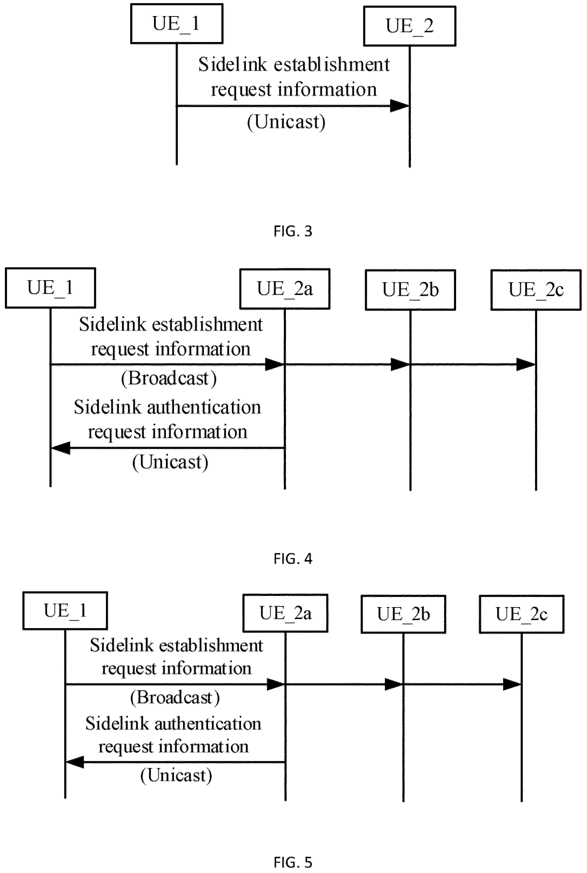

Specifically, in an embodiment, description is made by taking the PC5-S message being the sidelink establishment request information as an example. FIG. 3 is a diagram of an application scene of sending unicast sidelink establishment request information to a second terminal by a first terminal in the prior art. As shown in FIG. 3, UE_1 is the first terminal, UE_2 is the second terminal, and UE_1 and UE_2 may each include a physical layer, an MAC layer, an RLC layer, a PDCP layer, a radio resource control (RRC) layer and a high layer, wherein the high layer may be a non-access stratum (NAS), such as an application layer or a V2X layer.

In the prior art, when the UE_1 sends unicast sidelink establishment request information to the UE_2, the MAC layer of the UE_2 cannot submit a data packet to the high layer, nor can the PDCP layer and the RLC layer establish the corresponding PDCP receiving entity and RLC receiving entity as well as the corresponding receiving logical channel, resulting in that the second terminal cannot complete receiving of the unicast sidelink establishment request information.

In the embodiment provided by the present disclosure, when the UE_1 sends the first PC5-S message of the unicast type to the UE_2, namely, first sidelink establishment request information of the unicast type, the UE_1 may indicate the PC5-S message of the unicast type to be the broadcast type or the multicast type through the high layer; and then send a message sending request to the RRC layer through the high layer; wherein the message sending request indicates to send the PC5-S message to the UE_2; after the RRC layer receives the message sending request, the UE_1 may indicate through the RRC layer the RLC layer to establish an RLC sending entity and indicate the PDCP layer to establish a PDCP sending entity, the RRC layer sends the message sending request to the MAC layer, such that the MAC layer establishes a sending logical channel, the information type in the SCI domain corresponding to the PC5-S message is set to be the broadcast type or the multicast type based on the indication of the high layer, then the message sending request is sent to the physical layer through the MAC layer, and the PC5-S message is sent to the UE_2 through the physical layer.

After receiving the PC5-S message set to be the broadcast type or the multicast type through the physical layer, the UE_2 may establish the receiving logical channel through the MAC layer and send the PC5-S message to the RLC layer to establish the RLC receiving entity and send to the PDCP layer to establish the PDCP receiving entity, such that the PC5-S message may be sent to the high layer of the UE_2 through the RRC layer.

In another embodiment, description is made by taking the PC5-S message being the sidelink authentication request information as an example. FIG. 4 is a diagram of an application scene of sending unicast sidelink authentication request information to a second terminal by a first terminal in the prior art. As shown in FIG. 4, UE_1 is the second terminal, and UE_2a is the first terminal. In the prior art, when the UE_2a sends the unicast sidelink authentication request information to the UE_1, the MAC layer of the UE_1 cannot submit a data packet to the high layer and cannot establish the receiving logical channel, nor can the PDCP layer and the RLC layer establish the corresponding PDCP receiving entity and RLC receiving entity, resulting in that the UE_1 cannot complete receiving of the unicast sidelink establishment request information.

In the embodiment provided by the present disclosure, when the UE_2a, UE_2b and UE_2c receive a data packet of the sidelink establishment request information of the broadcast type sent by the UE_1, a target address included in the data packet is compared with their own addresses, it is assumed that the target address included in the data packet sent by the UE_1 is the same as the address of the UE_2a, when the UE_2a receives the sidelink establishment request information and sends the first PC5-S message of the unicast type to the UE_1, namely, first sidelink authentication request information of the unicast type, the UE_2a may indicate the PC5-S message of the unicast type to be the broadcast type or the multicast type through the high layer; and then send the message sending request to the RRC layer through the high layer; wherein the message sending request indicates to send the PC5-S message to the UE_1; and after the RRC layer receives the message sending request, the UE_2a may indicate through the RRC layer the RLC layer to establish the RLC sending entity and the PDCP layer to establish the PDCP sending entity, the RRC layer sends the message sending request to the MAC layer, such that the MAC layer establishes the sending logical channel, the information type in the SCI domain corresponding to the PC5-S message is set to be the broadcast type or the multicast type based on the indication of the high layer, then the message sending request is sent to the physical layer through the MAC layer, and the PC5-S message is sent to the UE_1 through the physical layer.

After receiving the PC5-S message set to be the broadcast type or the multicast type through the physical layer, the UE_1 may establish the receiving logical channel through the MAC layer and send the PC5-S message to the RLC layer to establish the RLC receiving entity and send to the PDCP layer to establish the PDCP receiving entity, such that the PC5-S message may be sent to the high layer of the UE_1 through the RRC layer.

In yet another embodiment, description is made by taking the PC5-S message being the sidelink security mode control command information as an example. FIG. 5 is a diagram of an application scene of sending unicast sidelink security mode control command information to a second terminal by a first terminal in the prior art. As shown in FIG. 5, UE_1 is the second terminal, and UE_2a is the first terminal. In the prior art, when the UE_2a sends the unicast sidelink security mode control command information to the UE_1, the MAC layer of the UE_1 cannot submit a data packet to the high layer, nor can the PDCP layer and the RLC layer establish the corresponding PDCP receiving entity and RLC receiving entity as well as the corresponding receiving logical channel, resulting in that the UE_1 cannot complete receiving of the unicast sidelink establishment request information.

In the embodiment provided by the present disclosure, when the UE_2a, UE_2b and UE_2c receive the data packet of the sidelink establishment request information of the broadcast type sent by the UE_1, the target address included in the data packet is compared with their own addresses, it is assumed that the target address included in the data packet sent by the UE_1 is the same as the address of the UE_2a, when the UE_2a receives the sidelink establishment request information and sends the first PC5-S message of the unicast type to the UE_1, namely, first sidelink security mode control command information of the unicast type, the UE_2a may indicate the PC5-S message of the unicast type to be the broadcast type or the multicast type through the high layer; and then send the message sending request to the RRC layer through the high layer; wherein the message sending request indicates to send the PC5-S message to the UE_1; and after the RRC layer receives the message sending request, the UE_2a may indicate the RLC layer to establish the RLC sending entity and the PDCP layer to establish the PDCP sending entity through the RRC layer, the RRC layer sends the message sending request to the MAC layer, such that the MAC layer establishes the sending logical channel, the information type in the SCI domain corresponding to the PC5-S message is set to be the broadcast type or the multicast type based on the indication of the high layer, then the message sending request is sent to the physical layer through the MAC layer, and the PC5-S message is sent to the UE_1 through the physical layer.

After receiving the PC5-S message set to be the broadcast type or the multicast type through the physical layer, the UE_1 may establish the receiving logical channel through the MAC layer and send the PC5-S message to the RLC layer to establish the RLC receiving entity and send to the PDCP layer to establish the PDCP receiving entity, such that the PC5-S message may be sent to the high layer of the UE_1 through the RRC layer.

In another optional implementation, the first terminal may set the propagation type of the PC5-S message to be the broadcast type or the multicast type through the RRC layer in the case that the RRC layer receives the message sending request of the high layer; wherein the message sending request indicates to send the PC5-S message to the second terminal.

Specifically, in an embodiment, description is made by taking the PC5-S message being the sidelink establishment request information as an example, when the UE_1 sends the first PC5-S message of the unicast type to the UE_2, namely, the first sidelink establishment request information of the unicast type, the UE_1 may send the message sending request to the RRC layer through the high layer; after the RRC layer receives the message sending request, the UE_1 may set the propagation type of the PC5-S message to be the broadcast type or the multicast type through the RRC layer, indicate the RLC layer to establish the RLC sending entity and the PDCP layer to establish the PDCP sending entity, and establish the corresponding sending logical channel through the MAC layer; and then the message sending request is sent to the physical layer through the MAC layer, and the PC5-S message is sent to the UE_2 through the physical layer.

After receiving the PC5-S message set to be the broadcast type or the multicast type through the physical layer, the UE_2 may establish the receiving logical channel through the MAC layer and send the PC5-S message to the RLC layer to establish the RLC receiving entity and send to the PDCP layer to establish the PDCP receiving entity, such that the PC5-S message may be sent to the high layer of the UE_2 through the RRC layer.

When the PC5-S message is the sidelink authentication request information, or when the PC5-S message is the sidelink security mode control command information, performing steps of the first terminal and the second terminal are similar to the above performing steps, which will not be described in detail here.

In another optional implementation, after the RRC layer of the first terminal receives the message sending request of the high layer, the RLC sending entity, the RLC receiving entity, the PDCP sending entity, the PDCP receiving entity, the sending logical channel and the receiving logical channel may be established through the RRC layer.

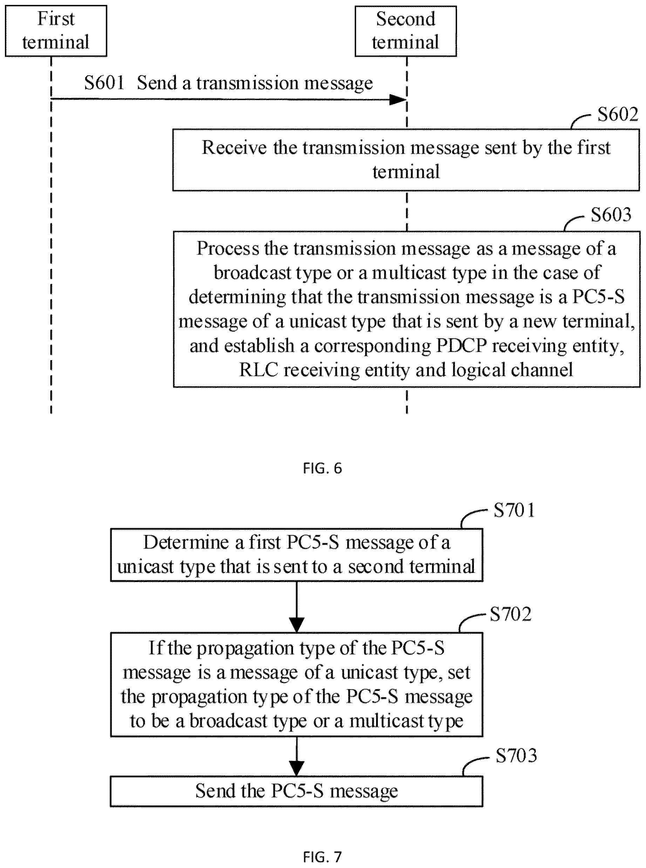

FIG. 6 shows a flowchart of interaction of another communication method provided by an embodiment of the present disclosure. The method is performed by a first terminal and a second terminal. As shown in FIG. 6, the method includes the following steps.

Step S601: the first terminal sends a transmission message to the second terminal.

Step S602: the second terminal receives the transmission message sent by the first terminal.

Step S603: the second terminal processes the transmission message as a message of a broadcast type or a multicast type in the case of determining that the transmission message is a PC5-S message of a unicast type that is sent by a new terminal, and establishes a corresponding PDCP receiving entity, RLC receiving entity and logical channel.

The new terminal may be a direct communication terminal that sends the transmission message to the second terminal for the first time, or a direct communication terminal that does not establish a PC5-S unicast connection with the second terminal, or a direct communication terminal that sends the transmission message to the second terminal for the first time by using a new layer-2 unicast connection address. The layer-2 unicast connection address may be called a source layer-2 ID, and the transmission message may be called sidelink establishment request information, or sidelink authentication request information or sidelink security mode control command information.

In an optional implementation, the second terminal may determine whether the transmission message is the PC5-S message of the unicast type that is sent by the new terminal through the following manner: determining that the transmission message is the PC5-S message of the unicast type that is sent by the new terminal in the case that the transmission message meets a set condition; wherein the set condition may include one or a combination of the following conditions:
1. the transmission message being a unicast message;
2. a logical channel identity (LCID) of the transmission message being 0 or 1 or 2;
3. the transmission message being a message that is sent to the second terminal for the first time by using the new layer-2 unicast connection address;
4. a destination address ID of the transmission message being the same as an address ID of the second terminal; wherein the destination address ID may be called a destination layer-2 ID; and
5. a current moment being within valid time corresponding to the transmission message.

Specifically, in an embodiment, description is made by taking the transmission message being the sidelink establishment request information as an example, UE_1 is the first terminal, UE_2 is the second terminal, after the UE_1 sends the transmission message to the UE_2, the UE_2 receives the transmission message sent by the UE_1 through a physical layer, and then may send the transmission message to an MAC layer through the physical layer, after receiving the transmission message, the MAC layer may decode the transmission message to obtain a protocol data unit (PDU) and then judge whether the transmission message meets the set condition; exemplarily, when the transmission message is a unicast message, the transmission message's LCID=0 or LCID=1 or LCID=2, the transmission message is the message that is sent to the UE_2 from the new layer-2 unicast connection address for the first time, in a header of the MAC PDU obtained by decoding the transmission message, a destination (DST) domain is equal to high eight bits of a certain source layer-2 ID in the first terminal, low 16 bits of the source layer-2 ID are equal to the destination layer-2 ID indicated in the corresponding SCI domain, namely, the destination address ID of the transmission message is the same as the address ID of the second terminal, and the current moment is still within the valid time corresponding to the transmission message, the UE_2 may send the MAC PDU obtained after decoding to a disassembling entity and a demultiplexing entity through the MAC layer and send to an RLC layer.

After the RLC layer receives the PDU, the UE_2 may judge whether the PDU meets an RLC set condition through the RLC layer, establish an RLC receiving entity through the RLC layer if the PDU meets the RLC set condition, initialize a state variable of the RCL receiving entity and complete receiving of the transmission message through the RLC layer. The RLC set condition may include one or a combination of the following conditions:
1. the transmission message being a unicast message;
2. an LCID of the transmission message being 0 or 1 or 2;
3. the transmission message being a first transmission message between the new layer-2 unicast connection address used by the first terminal and a layer-2 unicast connection address of the second terminal; and
4. the transmission message having no corresponding RLC receiving entity.

Exemplarily, when the UE_2 may judge that the PDU is the unicast message through the RLC layer, a PDU's LCID=0 or LCID=1 or LCID=2, the PDU is a first PDU from a pair of L2 IDs (one is a source layer-2 ID and the other is a destination layer-2 ID), namely, the PDU is a message that is sent from the new layer-2 unicast connection address to a layer-2 unicast connection address of the UE_2 for the first time, and the PDU has no corresponding RLC receiving entity, the UE_2 may establish the RLC receiving entity through the RLC layer, initialize the state variable of the RLC receiving entity and complete receiving of the PDU through the RLC layer.

After completing receiving of the PDU through the RLC layer, the UE_2 may send the PDU to the PDCP layer through the RLC layer, after the PDCP layer receives the PDU, the UE_2 may judge whether the PDU meets a PDCP set condition through the PDCP layer, establish a PDCP receiving entity through the PDCP layer if the PDU meets the PDCP set condition, initialize a state variable of the PDCP receiving entity, and complete receiving of the transmission message through the PDCP layer. The PDCP set condition may include one or a combination of the following conditions:
1. the transmission message being a unicast message;
2. an LCID of the transmission message being 0 or 1 or 2;
3. the transmission message being a first transmission message between the new layer-2 unicast connection address used by the first terminal and a layer-2 unicast connection address of the second terminal; and
4. the transmission message having no corresponding PDCP receiving entity.

In an optional implementation, the transmission message is determined as the message that is sent by the first terminal to the second terminal for the first time through the following manner:
determining that the transmission message is the message that is sent by the first terminal to the second terminal for the first time in the case that an ID of the first terminal is not saved in the second terminal, and/or, the second terminal does not receive a message sent by the first terminal within set time.

Exemplarily, when the UE_2 may judge that the PDU is the unicast message through the PDCP layer, a PDU's LCID=0 or LCID=1 or LCID=2, the PDU is the message that is sent from the new layer-2 unicast connection address to the layer-2 unicast connection address of the UE_2 for the first time, and the PDU has no corresponding PDCP receiving entity, the UE_2 may establish the PDCP receiving entity through the PDCP layer, initialize the state variable of the PDCP receiving entity and complete receiving of the transmission message through the PDCP layer.

After completing receiving of the PDU through the PDCP layer, the UE_2 may submit the PDU to a high layer through the PDCP layer.

In another embodiment, description is made by taking the transmission message being the sidelink authentication request information as an example, the UE_1 is the second terminal, and the UE_2a is the first terminal. Specifically, when the UE_2a, UE_2b and UE_2c receive a data packet of the sidelink establishment request information of the broadcast type sent by the UE_1, a target address included in the data packet is compared with their own addresses, it is assumed that the target address included in the data packet sent by the UE_1 is the same as the address of the UE_2a, the UE_2a generates the sidelink authentication request information after receiving the sidelink establishment request information and sends the sidelink authentication request information as a transmission message to the UE_1.

In an optional implementation, before sending the transmission message to the UE_1, the UE_2a may send a message sending request to an RRC layer through a high layer; the message sending request indicates to send the transmission message to the UE_1; through the RRC layer, the RLC layer is indicated to establish an RLC sending entity, the PDCP layer is indicated to establish the PDCP sending entity, then the message sending request is sent to an MAC layer, a sending logical channel is established through the MAC layer, the message sending request is sent to a physical layer, and finally, the transmission message is sent to the UE_1 through the physical layer.

After receiving the transmission message sent by the UE_2a through the physical layer, the UE_1 may send the transmission message to the MAC layer through the physical layer, the MAC layer may decode the transmission message to obtain a PDU after receiving the transmission message, and then judge whether the transmission message meets a set condition; exemplarily, when the transmission message is the unicast message, the transmission message's LCID=0 or LCID=1 or LCID=2, the transmission message is a message that is sent to the UE_2 from one new layer-2 unicast connection address for the first time, in a header of the MAC PDU obtained by decoding the transmission message, the DST domain is equal to high 8 bits of any new layer-2 unicast connection address in the first terminal, low 16 bits of the layer-2 unicast connection address are equal to a destination layer-2 connection address indicated in the corresponding SCI domain, namely, the destination address ID of the transmission message is the same as the address ID of the second terminal, and the current moment is still within the valid time corresponding to the transmission message, the UE_1 may send the MAC PDU obtained after decoding to a disassembling entity and a demultiplexing entity through the MAC layer, and send to the RLC layer.

After the RLC layer receives the PDU, the UE_1 may judge whether the PDU meets the RLC set condition through the RLC layer, if the UE_1 judges that the PDU is the unicast message through the RLC layer, a PDU's LCID=0 or LCID=1 or LCID=2, the PDU is a first PDU from a pair of L2 IDs (one is a source layer-2 ID and the other is a destination layer-2 ID), and the PDU has no corresponding RLC receiving entity, the UE_1 may establish the RLC receiving entity through the RLC layer, initialize the state variable of the RLC receiving entity and complete receiving of the PDU through the RLC layer.

After completing receiving of the PDU through the RLC layer, the UE_1 may send the PDU to the PDCP layer through the RLC layer, after the PDCP layer receives the PDU, the UE_1 may judge whether the PDU meets the PDCP set condition through the PDCP layer, if the UE_1 judges that the PDU is the unicast message through the PDCP layer, a PDU's LCID=0 or LCID=1 or LCID=2, the PDU is a message that is sent to the layer-2 unicast connection address of the UE_1 from one new layer-2 unicast connection address for the first time, and the PDU has no corresponding PDCP receiving entity, the UE_1 may establish the PDCP receiving entity through the PDCP layer, initialize the state variable of the PDCP receiving entity, and complete receiving of the transmission message through the PDCP layer.

After completing receiving of the PDU through the PDCP layer, the UE_1 may submit the PDU to a high layer through the PDCP layer.

In another embodiment, description is made by taking the transmission message being the sidelink security mode control command information as an example, the UE_1 is the second terminal, and the UE_2a is the first terminal. When the UE_2a, UE_2b and UE_2c receive the data packet of the sidelink establishment request information of the broadcast type sent by the UE_1, the target address included in the data packet is compared with their own addresses, it is assumed that the target address included in the data packet sent by the UE_1 is the same as the address of the UE_2a, the UE_2a generates the sidelink security mode control command information after receiving the sidelink establishment request information and sends the sidelink security mode control command information as a transmission message to the UE_1.

After receiving the transmission message sent by the UE_2a through the physical layer, the UE_1 may send the transmission message to the MAC layer through the physical layer, the MAC layer may decode the transmission message to obtain a PDU after receiving the transmission message, and then judge whether the transmission message meets a set condition; exemplarily, when the transmission message is the unicast message, the transmission message's LCID=0 or LCID=1 or LCID=2, the transmission message is a message that is sent to the UE_2 from one new layer-2 unicast connection address for the first time, in a header of the MAC PDU obtained by decoding the transmission message, the DST domain is equal to high 8 bits of any new layer-2 unicast connection address in the first terminal, low 16 bits of the layer-2 unicast connection address are equal to a destination layer-2 connection address indicated in the corresponding SCI domain, namely, the destination address ID of the transmission message is the same as the address ID of the second terminal, and the current moment is still within the valid time corresponding to the transmission message, the UE_1 may send the MAC PDU obtained after decoding to the disassembling entity and the demultiplexing entity through the MAC layer, and send to the RLC layer.

After the RLC layer receives the PDU, the UE_1 may judge whether the PDU meets the RLC set condition through the RLC layer, if the UE_1 judges that the PDU is the unicast message through the RLC layer, a PDU's LCID=0 or LCID=1 or LCID=2, the PDU is a message that is sent to the layer-2 unicast connection address of the UE_1 from one new layer-2 unicast connection address for the first time, and the PDU has no corresponding RLC receiving entity, the UE_1 may establish the RLC receiving entity through the RLC layer, initialize the state variable of the RLC receiving entity, and complete receiving of the PDU through the RLC layer.

After completing receiving of the PDU through the RLC layer, the UE_1 may send the PDU to the PDCP layer through the RLC layer, after the PDCP layer receives the PDU, the UE_1 may judge whether the PDU meets the PDCP set condition through the PDCP layer, if the UE_1 judges that the PDU is the unicast message through the PDCP layer, a PDU's LCID=0 or LCID=1 or LCID=2, the PDU is a message that is sent to the layer-2 unicast connection address of the UE_1 from one new layer-2 unicast connection address for the first time, and the PDU has no corresponding PDCP receiving entity, the UE_1 may establish the PDCP receiving entity through the PDCP layer, initialize the state variable of the PDCP receiving entity, and complete receiving of the transmission message through the PDCP layer.

After completing receiving of the PDU through the PDCP layer, the UE_1 may submit the PDU to the high layer through the PDCP layer.

In another optional implementation, when determining through the MAC layer that the transmission message is the PC5-S message of the unicast type that is sent by a new terminal, the second terminal may use the transmission message as the message of the broadcast type or the multicast type, establish a receiving logical channel through the MAC layer and send indication information to the RRC layer; and based on the indication information, the second terminal may establish the PDCP receiving entity and the RLC receiving entity through the RRC layer.

Specifically, in an embodiment, description is made by taking the transmission message being the sidelink establishment request information as an example, after the UE_1 sends the transmission message to the UE_2 and the UE_2 receives the transmission message sent by the UE_1 through the physical layer, the transmission message may be sent to the MAC layer through the physical layer, and the MAC layer may decode the transmission message after receiving the transmission message to obtain the PDU and then judge whether the transmission message meets the set condition; exemplarily, when the transmission message is the unicast message, the transmission message's LCID=0 or LCID=1 or LCID=2, the transmission message is a message that is sent to the UE_2 from one new layer-2 unicast connection address for the first time, in a header of the MAC PDU obtained by decoding the transmission message, the DST domain is equal to high 8 bits of any new layer-2 unicast connection address in the first terminal, low 16 bits of the layer-2 unicast connection address are equal to a destination layer-2 connection address indicated in the corresponding SCI domain, namely, the destination address ID of the transmission message is the same as the address ID of the second terminal, and the current moment is still within the valid time corresponding to the transmission message, the UE_2 may establish the receiving logical channel through the MAC layer, and send indication information to the RRC layer, and based on the indication information, the UE_2 may indicate the RLC layer to establish the RLC receiving entity and the PDCP layer to establish the PDCP receiving entity through the RRC layer.

After completing establishment of the receiving logical channel, the PDCP receiving entity and the RLC receiving entity, the UE_2 may complete receiving of the PDU through the RLC layer and the PDCP layer, and submit the PDU to the high layer through the PDCP layer.

In another embodiment, description is made by taking the PC5-S message being the sidelink authentication request information as an example, the UE_1 is the second terminal, and the UE_2a is the first terminal. Specifically, when the UE_2a, UE_2b and UE_2c receive the data packet of the sidelink establishment request information of the broadcast type sent by the UE_1, the target address included in the data packet is compared with their own addresses, it is assumed that the target address included in the data packet sent by the UE_1 is the same as the address of the UE_2a, the UE_2a generates the sidelink authentication request information after receiving the sidelink establishment request information and sends the sidelink authentication request information as a transmission message to the UE_1.

After receiving the transmission message sent by the UE_2a through the physical layer, the UE_1 may send the transmission message to the MAC layer through the physical layer, and the MAC layer may decode the transmission message after receiving the transmission message to obtain the PDU and then judge whether the transmission message meets the set condition; exemplarily, when the transmission message is the unicast message, the transmission message's LCID=0 or LCID=1 or LCID=2, the transmission message is the message that is sent to the UE_2 from one new layer-2 unicast connection address for the first time, in a header of the MAC PDU obtained by decoding the transmission message, the DST domain is equal to high 8 bits of any new layer-2 unicast connection address in the first terminal, low 16 bits of the layer-2 unicast connection address are equal to a destination layer-2 connection address indicated in the corresponding SCI domain, namely, the destination address ID of the transmission message is the same as the address ID of the second terminal, and the current moment is still within the valid time corresponding to the transmission message, the UE_1 may establish the receiving logical channel through the MAC layer and send indication information to the RRC layer, and based on the indication information, the UE_1 may indicate the RLC layer to establish the RLC receiving entity and the PDCP layer to establish the PDCP receiving entity through the RRC layer.

After completing establishment of the PDCP receiving entity, the RLC receiving entity and the receiving logical channel, the UE_1 may complete receiving of the PDU through the RLC layer and the PDCP layer, and submit the PDU to the high layer through the PDCP layer.

In another embodiment, description is made by taking the PC5-S message being the sidelink security mode control command information as an example, the UE_1 is the second terminal, and the UE_2a is the first terminal. Specifically, when the UE_2a, UE_2b and UE_2c receive the data packet of the sidelink establishment request information of the broadcast type sent by the UE_1, the target address included in the data packet is compared with their own addresses, it is assumed that the target address included in the data packet sent by the UE_1 is the same as the address of the UE_2a, the UE_2a generates the sidelink security mode control command information after receiving the sidelink establishment request information and sends the sidelink security mode control command information as a transmission message to the UE_1.

After receiving the transmission message sent by the UE_2a through the physical layer, the UE_1 may send the transmission message to the MAC layer through the physical layer, and the MAC layer may decode the transmission message after receiving the transmission message to obtain the PDU and then judge whether the transmission message meets the set condition; exemplarily, when the transmission message is the unicast message, the transmission message's LCID=0 or LCID=1 or LCID=2, the transmission message is the message that is sent to the UE_2 from one new layer-2 unicast connection address for the first time, in a header of the MAC PDU obtained by decoding the transmission message, the DST domain is equal to high 8 bits of any new layer-2 unicast connection address in the first terminal, low 16 bits of the layer-2 unicast connection address are equal to a destination layer-2 connection address indicated in the corresponding SCI domain, namely, the destination address ID of the transmission message is the same as the address ID of the second terminal, and the current moment is still within the valid time corresponding to the transmission message, the UE_1 may establish the receiving logical channel through the MAC layer and send indication information to the RRC layer, and based on the indication information, the UE_1 may indicate the RLC layer to establish the RLC receiving entity and the PDCP layer to establish the PDCP receiving entity through the RRC layer.

After completing establishment of the PDCP receiving entity, the RLC receiving entity and the receiving logical channel, the UE_1 may complete receiving of the PDU through the RLC layer and the PDCP layer, and submit the PDU to the high layer through the PDCP layer.

In another optional implementation, the second terminal sets a propagation type of the PC5-S message to be the broadcast type or the multicast type through the RRC layer in the case that a message sending request indicates to send the PC5-S message of the unicast type to the first terminal after the RRC layer receives the message sending request of the high layer; the high layer being the application layer or the V2X layer.

Exemplarily, description is made by taking the PC5-S message being the sidelink security mode control command information as an example, when the UE_2a, UE_2b and UE_2c receive the data packet of the sidelink establishment request information of the broadcast type sent by the UE_1, the target address included in the data packet is compared with their own addresses, it is assumed that the target address included in the data packet sent by the UE_1 is the same as the address of the UE_2a, the UE_2a generates the sidelink security mode control command information of the unicast type after receiving the sidelink establishment request information and sends the PC5-S message of the unicast type to the UE_1.

Before sending the PC5-S message to the UE_1, the UE_2a may send the message sending request to the RRC layer of the UE_2a through the high layer of the UE_2a, and the message sending request indicates to send the PC5-S message of the unicast type to the UE_1; after the RRC layer receives the message sending request of the high layer, the UE_2a may set the propagation type of the PC5-S message to be the broadcast type or the multicast type through the RRC layer, indicate the RLC layer to establish the RLC sending entity, indicate the PDCP layer to establish the PDCP sending entity, then establish the sending logical channel through the MAC layer, send the message sending request to the physical layer, and send the PC5-S message to the UE_1 through the physical layer.

After receiving the PC5-S message set to be the broadcast type or the multicast type through the physical layer, the UE_1 may establish the receiving logical channel through the MAC layer and send the PC5-S message to the RLC layer to establish the RLC receiving entity and send to the PDCP layer to establish the PDCP receiving entity, such that the PC5-S message may be sent to the high layer of the UE_1 through the RRC layer.

In another optional implementation, after the RRC layer receives the message sending request of the high layer, if the message sending request indicates to send the PC5-S message of the unicast type to the first terminal, through the RRC layer, the RLC layer of the second terminal is indicated to establish the RLC sending entity and RLC receiving entity, the PDCP layer of the second terminal is indicated to establish the PDCP sending entity and PDCP receiving entity, and the MAC layer of the second terminal is indicated to establish the sending logical channel and the receiving logical channel.

Based on the same inventive concept, an embodiment provided by the present disclosure provides a flowchart of a communication method. The method is performed by a first terminal. As shown in FIG. 7, the method includes the following steps.

Step S701: a first PC5-S message of a unicast type sent to a second terminal is determined.

Step S702: a propagation type of the PC5-S message is set to be a broadcast type or a multicast type in the case that the propagation type of the PC5-S message is a unicast message.

Step S703: the PC5-S message is sent.

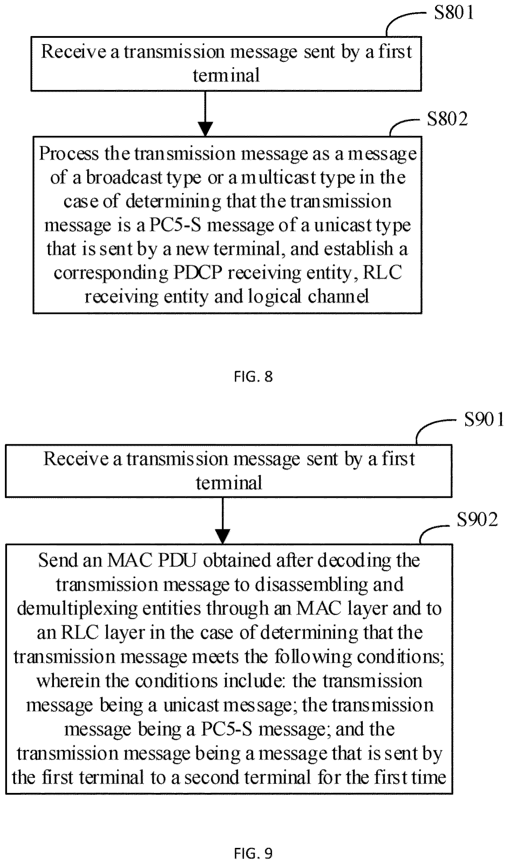

Based on the same inventive concept, an embodiment provided by the present disclosure provides a flowchart of a communication method. The method is performed by a second terminal. As shown in FIG. 8, the method includes the following steps.

Step S801: a transmission message sent by a first terminal is received.

Step S802: the transmission message is processed as a message of a broadcast type or a multicast type in the case of determining that the transmission message is a PC5-S message of a unicast type that is sent by a new terminal, and a corresponding PDCP receiving entity, RLC receiving entity and logical channel are established.

The new terminal is a direct communication terminal that sends the transmission message to the second terminal for the first time, or a direct communication terminal that does not establish a PC-S unicast connection with the second terminal, or a direct communication terminal that sends the transmission message to the second terminal for the first time by using a new layer-2 unicast connection address.

Based on the same inventive concept, an embodiment provided by the present disclosure provides a flowchart of a communication method. The method is performed by a second terminal. As shown in FIG. 9, the method includes the following steps.

Step S901: a transmission message sent by a first terminal is received.

Step S902: an MAC PDU obtained after decoding the transmission message is sent to disassembling and demultiplexing entities through an MAC layer and to an RLC layer in the case of determining that the transmission message meets the following conditions; wherein the conditions include: the transmission message being a unicast message; the transmission message being a PC5-S message; and the transmission message being a message that is sent by the first terminal to the second terminal for the first time.

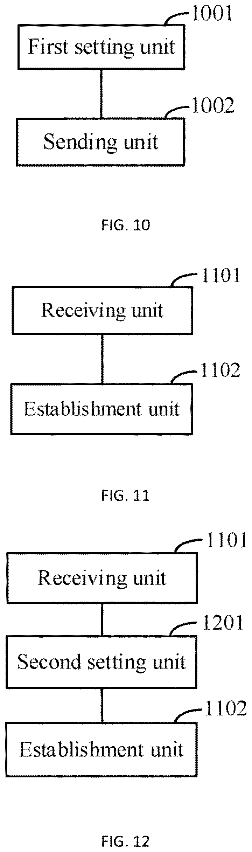

Based on the same inventive concept, an embodiment provided by the present disclosure provides a terminal, as shown in FIG. 10, the terminal includes a first setting unit 1001 and a sending unit 1002.

The first setting unit 1001 determines a first PC5-S message of a unicast type sent to a second terminal; and sets a propagation type of the PC5-S message to be a broadcast type or a multicast type in the case that the propagation type of the PC5-S message is a unicast message.

The sending unit 1002 sends the PC5-S message.

In an optional embodiment, the first setting unit 1001 may be specifically configured to:
indicate the propagation type of the PC5-S message to be the broadcast type or the multicast type by a high layer; the high layer being an application layer or a V2X layer; and
set an information type in an SCI domain corresponding to the PC5-S message to be the broadcast type or the multicast type through an MAC layer based on the indication of the high layer.

In an optional embodiment, the first setting unit 1001 may be specifically configured to:
set the propagation type of the PC5-S message to be the broadcast type or the multicast type through an RRC layer in the case that the RRC layer receives a message sending request of the high layer; the message sending request indicating to send the PC5-S message to the second terminal; and the high layer being an application layer or a V2X layer.

In an optional embodiment, the first setting unit 1001 may be specifically configured to:
establish a PDCP sending entity, a PDCP receiving entity, an RLC sending entity, an RLC receiving entity, a sending logical channel and a receiving logical channel through the RRC layer after the RRC layer receives the message sending request of the high layer.

In an optional embodiment, the first PC5-S message of the unicast type includes a PC5-S message sent by the first terminal to the second terminal for the first time by using a new layer-2 unicast connection address; the PC5-S message being sidelink establishment request information, sidelink authentication request information or sidelink security mode control command information.

Based on the same inventive concept, an embodiment provided by the present disclosure provides a terminal. As shown in FIG. 11, the terminal includes a receiving unit 1101 and an establishment unit 1102.

The receiving unit 1101 receives a transmission message sent by a first terminal.

The establishment unit 1102 processes the transmission message as a message of a broadcast type or a multicast type in the case of determining that the transmission message is a PC5-S message of a unicast type that is sent by a new terminal, and establishes a corresponding PDCP receiving entity, RLC receiving entity and logical channel; the new terminal being a direct communication terminal that sends the transmission message to the second terminal for the first time, or a direct communication terminal that does not establish a PC-S unicast connection with the second terminal, or a direct communication terminal that sends the transmission message to the second terminal for the first time by using a new layer-2 unicast connection address.

In an optional embodiment, the establishment unit 1102 may be specifically configured to:
determine that the transmission message is the PC5-S message of the unicast type that is sent by the new terminal in the case that the transmission message meets a set condition; the set condition including one or a combination of the following conditions:
the transmission message being a unicast message;
an LCID of the transmission message being 0 or 1 or 2;
the transmission message being a message that is sent to the second terminal for the first time by using a new layer-2 unicast connection address;
a destination address ID of the transmission message being the same as an address ID of the second terminal; and
a current moment being within valid time corresponding to the transmission message.

In an optional embodiment, the establishment unit 1102 may be specifically configured to:
determine that the transmission message is the message that is sent by the first terminal to the second terminal for the first time in the case that an ID of the first terminal is not saved in the second terminal, and/or, the second terminal does not receive a message sent by the first terminal within set time.

In an optional embodiment, the establishment unit 1102 may be specifically configured to:
process the transmission message as the message of the broadcast type or the multicast type in the case of determining through the MAC layer that the transmission message is the PC5-S message of the unicast type that is sent by the new terminal, establish the logical channel through the MAC layer, and send the transmission message to an RLC layer;
establish the RLC receiving entity through the RLC layer, and send the transmission message to a PDCP layer through the RLC layer; and
establish the PDCP receiving entity through the PDCP layer.

In an optional embodiment, the establishment unit 1102 may be specifically configured to:
establish the RLC receiving entity through the RLC layer in the case of determining that the transmission message meets an RCL set condition through the RLC layer;
the RLC set condition including one or a combination of the following conditions:
   the transmission message being a unicast message;
   an LCID of the transmission message being 0 or 1 or 2;
   the transmission message being a first transmission message between the new layer-2 unicast connection address used by the first terminal and a layer-2 unicast connection address of the second terminal; and
   the transmission message having no corresponding RLC receiving entity.

In an optional embodiment, the establishing the RLC receiving entity through the RLC layer includes one or a combination of the following actions:
establishing the RLC receiving entity through the RLC layer;
initializing a state variable of the RLC receiving entity through the RLC layer; and
completing receiving of the transmission message through the RLC layer.

In an optional embodiment, the establishment unit 1102 may be specifically configured to:
establish the PDCP receiving entity through the PDCP layer in the case of determining that the transmission message meets a PDCP set condition through the PDCP layer; and
send the transmission message to a high layer through the PDCP layer; the high layer being an application layer or a V2X layer.

The PDCP set condition including one or a combination of the following conditions:
the transmission message being a unicast message;
an LCID of the transmission message being 0 or 1 or 2;
the transmission message being a first transmission message between the new layer-2 unicast connection address used by the first terminal and a layer-2 unicast connection address of the second terminal; and
the transmission message having no corresponding PDCP receiving entity.

In an optional embodiment, the establishing the PDCP receiving entity through the PDCP layer includes one or a combination of the following actions:
establishing the PDCP receiving entity through the PDCP layer;
initializing a state variable of the PDCP receiving entity through the PDCP layer; and
completing receiving of the transmission message through the PDCP layer.

In an optional embodiment, the establishment unit 1102 may be specifically configured to:
process the transmission message as the message of the broadcast type or the multicast type in the case of determining through the MAC layer that the transmission message is the PC5-S message of the unicast type that is sent by the new terminal, establish the logical channel through the MAC layer, and send indication information to an RRC layer; and
establish the PDCP receiving entity and the RLC receiving entity through the RRC layer based on the indication information.

In an optional embodiment, the establishment unit 1102 may be specifically configured to:
indicate the PDCP layer of the first terminal to establish a PDCP sending entity and a PDCP receiving entity, and indicate the RLC layer of the first terminal to establish an RLC sending entity and an RLC receiving entity and establish a sending logical channel and a receiving logical channel through the RRC layer in the case that a message sending request indicates to send the PC5-S message of the unicast type to the first terminal after the RRC layer receives the message sending request of the high layer.

In an optional embodiment, after the receiving unit 1101, a second setting unit 1201 may also be included, and as shown in FIG. 12, the second setting unit 1201 may be specifically configured to:
set a propagation type of the PC5-S message to be the broadcast type or the multicast type through the RRC layer in the case that a message sending request indicates to send the PC5-S message of the unicast type to the first terminal after the RRC layer receives the message sending request of the high layer; the high layer being the application layer or the V2X layer.

Based on the same technical concept, an embodiment of the present disclosure further provides a terminal. The terminal can perform any communication method implemented in the above embodiments.

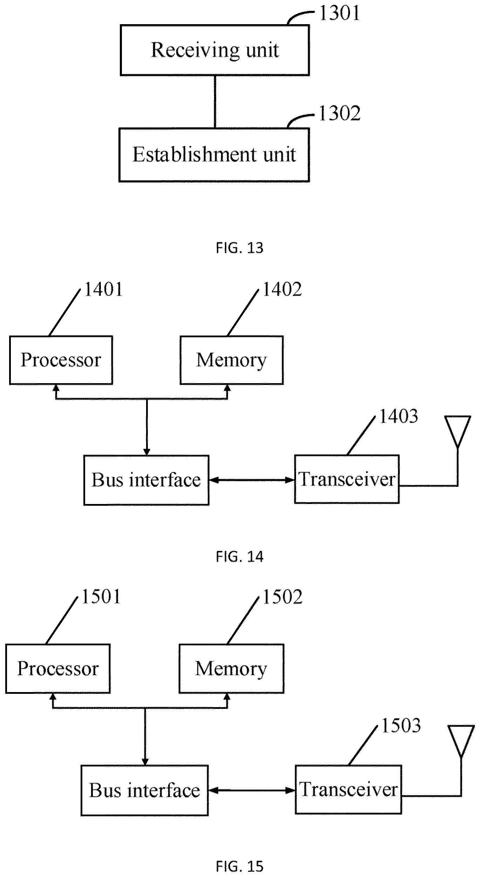

Based on the same inventive concept, an embodiment provided by the present disclosure provides a terminal. As shown in FIG. 13, the terminal includes a receiving unit 1301 and an establishment unit 1302.

The receiving unit 1301 receives a transmission message sent by a first terminal.

The establishment unit 1302 sends an MAC PDU obtained after decoding the transmission message to disassembling and demultiplexing entities through an MAC layer and to an RLC layer in the case of determining that the transmission message meets the following conditions.

The conditions include:
the transmission message being a unicast message;
the transmission message being a PC5-S message; and
the transmission message being a message that is sent by the first terminal to a second terminal for the first time.

In an optional embodiment, the establishment unit 1302 may be specifically configured to:
determine that the transmission message is the PC5-S message in the case that a logical channel ID of the transmission message is 0 or 1 or 2.

In an optional embodiment, the transmission message is determined as the message that is sent by the first terminal to the second terminal for the first time through the following manner:
determining that the transmission message is the message that is sent by the first terminal to the second terminal for the first time in the case that an ID of the first terminal is not saved in the second terminal, and/or, the second terminal does not receive a message sent by the first terminal within set time.

In an optional embodiment, the condition further includes:
a destination address ID of the transmission message being the same as an address ID of the second terminal.

In an optional embodiment, the method further includes:
establishing an RLC receiving entity in the case that the transmission message has no corresponding RLC receiving entity, and sending the transmission message to a PDCP layer through the RLC layer.

In an optional embodiment, the establishing an RLC receiving entity includes one or a combination of the following actions:
establishing the RLC receiving entity through the RLC layer;
initializing a state variable of the RLC receiving entity through the RLC layer; and
completing receiving of the transmission message through the RLC layer.

In an optional embodiment, the method further includes:
establishing a PDCP receiving entity in the case that the transmission message has no corresponding PDCP receiving entity.

In an optional embodiment, the establishing a PDCP receiving entity includes one or a combination of the following actions:
establishing the PDCP receiving entity through the PDCP layer;
initializing a state variable of the PDCP receiving entity through the PDCP layer; and
completing receiving of the transmission message through the PDCP layer.

In an optional embodiment, the method further includes:
sending the transmission message to a high layer through the PDCP layer; the high layer being an application layer or a V2X layer.

FIG. 14 shows a schematic structural diagram of the terminal provided by an embodiment of the present disclosure, namely, showing another schematic structural diagram of the terminal. As shown in FIG. 14, the terminal includes a processor 1401, a memory 1402 and a transceiver 1403.

The processor 1401 is responsible for managing a bus architecture and general processing, and the memory 1402 may store data used by the processor 1401 when performing operations. The transceiver 1403 is configured to receive and send data under control of the processor 1401.

The bus architecture may include any quantity of interconnected buses and bridges, specifically, linking various circuits of one or more processors represented by the processor 1401 and a memory represented by the memory 1402 together. The bus architecture may also link various other circuits such as a peripheral device, a voltage stabilizer and a power management circuit, which are well-known in the art and therefore, will not be further described herein. A bus interface provides an interface. The processor 1401 is responsible for managing a bus architecture and general processing, and the memory 1402 may store data used by the processor 1401 when performing operations.

Flows disclosed in the embodiments of the present disclosure may be applied to the processor 1401 or implemented by the processor 1401. In an implementing process, various steps of a signal processing flow may be completed by an integrated logic circuit of hardware in the processor 1401 or instructions of a software form. The processor 1401 may be a general-purpose processor, a digital signal processor, an application-specific integrated circuit, a field-programmable gate array or another programmable logic device, discrete gate, transistor logic device and discrete hardware component and may implement or perform the methods, steps and logic block diagrams disclosed in the embodiments of the present disclosure. The general-purpose processor may be a microprocessor or any conventional processor. The steps of the methods disclosed by the embodiments of the present disclosure may be directly embodied by being performed and completed by a hardware processor, or performed and completed by a combination of hardware and software modules in the processor. The software module may be located in a storage medium mature in the art such as a random access memory, a flash memory, a read-only memory, a programmable read-only memory or an electrically erasable programmable memory and a register. The storage medium is located in the memory 1402, and the processor 1401 reads information in the memory 1402, and completes steps of the signal processing flow in combination with hardware.

Specifically, the processor 1401 is configured to read a computer program in the memory 1402 and implement, when executing the computer program:
determining a first PC5-S message of a unicast type sent to a second terminal;
setting a propagation type of the PC5-S message to be a broadcast type or a multicast type in the case that the propagation type of the PC5-S message is a unicast message; and
sending the PC5-S message.

In an optional embodiment, the processor 1401 is specifically configured to:
indicate the propagation type of the PC5-S message to be the broadcast type or the multicast type by a high layer; the high layer being an application layer or a V2X layer; and
set an information type in an SCI domain corresponding to the PC5-S message to be the broadcast type or the multicast type through an MAC layer based on the indication of the high layer.

In an optional embodiment, the processor 1401 is specifically configured to:
set the propagation type of the PC5-S message to be the broadcast type or the multicast type through an RRC layer in the case that the RRC layer receives a message sending request of the high layer; the message sending request indicating to send the PC5-S message to the second terminal; and the high layer being an application layer or a V2X layer.

In an optional embodiment, the processor 1401 is further configured to:
establish a PDCP sending entity, a PDCP receiving entity, an RLC sending entity, an RLC receiving entity, a sending logical channel and a receiving logical channel through the RRC layer after the RRC layer receives the message sending request of the high layer.

In an optional embodiment, the first PC5-S message of the unicast type includes a PC5-S message sent by the first terminal to the second terminal for the first time by using a new layer-2 unicast connection address; the PC5-S message being sidelink establishment request information, sidelink authentication request information or sidelink security mode control command information.

Based on the same technical concept, an embodiment of the present disclosure further provides a terminal. The terminal can perform any communication method implemented in the above embodiments.

FIG. 15 shows a schematic structural diagram of the terminal provided by an embodiment of the present disclosure, namely, showing another schematic structural diagram of the terminal. As shown in FIG. 15, the terminal includes a processor 1501, a memory 1502 and a transceiver 1503.

The processor 1501 is responsible for managing a bus architecture and general processing, and the memory 1502 may store data used by the processor 1501 when performing operations. The transceiver 1503 is configured to receive and send data under control of the processor 1501.

The bus architecture may include any quantity of interconnected buses and bridges, specifically, linking various circuits of one or more processors represented by the processor 1501 and a memory represented by the memory 1502 together. The bus architecture may also link various other circuits such as a peripheral device, a voltage stabilizer and a power management circuit, which are well-known in the art and therefore, will not be further described herein. A bus interface provides an interface. The processor 1501 is responsible for managing a bus architecture and general processing, and the memory 1502 may store data used by the processor 1501 when performing operations.

Flows disclosed in the embodiments of the present disclosure may be applied to the processor 1501 or implemented by the processor 1501. In an implementing process, various steps of a signal processing flow may be completed by an integrated logic circuit of hardware in the processor 1501 or instructions of a software form. The processor 1501 may be a general-purpose processor, a digital signal processor, an application-specific integrated circuit, a field-programmable gate array or another programmable logic device, discrete gate, transistor logic device and discrete hardware component and may implement or perform the methods, steps and logic block diagrams disclosed in the embodiments of the present disclosure. The general-purpose processor may be a microprocessor or any conventional processor. The steps of the methods disclosed by the embodiments of the present disclosure may be directly embodied by being performed and completed by a hardware processor, or performed and completed by a combination of hardware and software modules in the processor. The software module may be located in a storage medium mature in the art such as a random access memory, a flash memory, a read-only memory, a programmable read-only memory or an electrically erasable programmable memory and a register. The storage medium is located in the memory 1502, and the processor 1501 reads information in the memory 1502, and completes steps of the signal processing flow in combination with hardware.

Specifically, the processor 1501 is configured to read a computer program in the memory 1502 and implement, when executing the computer program:
receiving a transmission message sent by a first terminal; and
processing the transmission message as a message of a broadcast type or a multicast type in the case of determining that the transmission message is a PC5-S message of a unicast type that is sent by a new terminal, and establishing a corresponding PDCP receiving entity, RLC receiving entity and logical channel; the new terminal being a direct communication terminal that sends the transmission message to the second terminal for the first time, or a direct communication terminal that does not establish a PC-S unicast connection with the second terminal, or a direct communication terminal that sends the transmission message to the second terminal for the first time by using a new layer-2 unicast connection address.

In an optional embodiment, the processor 1501 determines whether the transmission message is the PC5-S message of the unicast type that is sent by the new terminal through the following manner:
determining that the transmission message is the PC5-S message of the unicast type that is sent by the new terminal in the case that the transmission message meets a set condition; the set condition including one or a combination of the following conditions:
the transmission message being a unicast message;
an LCID of the transmission message being 0 or 1 or 2;
the transmission message being a message that is sent to the second terminal for the first time by using a new layer-2 unicast connection address;
a destination address ID of the transmission message being the same as an address ID of the second terminal; and
a current moment being within valid time corresponding to the transmission message.

In an optional embodiment, the processor 1501 is specifically configured to:
process the transmission message as the message of the broadcast type or the multicast type in the case of determining through the MAC layer that the transmission message is the PC5-S message of the unicast type that is sent by the new terminal, establish the logical channel through the MAC layer, and send the transmission message to an RLC layer;
establish the RLC receiving entity through the RLC layer, and send the transmission message to a PDCP layer through the RLC layer; and
establish the PDCP receiving entity through the PDCP layer.

In an optional embodiment, the processor 1501 is specifically configured to:
establish the RLC receiving entity through the RLC layer in the case of determining that the transmission message meets an RCL set condition through the RLC layer;
the RLC set condition including one or a combination of the following conditions:
   the transmission message being a unicast message;
   an LCID of the transmission message being 0 or 1 or 2;
   the transmission message being a first transmission message between the new layer-2 unicast connection address used by the first terminal and a layer-2 unicast connection address of the second terminal; and
   the transmission message having no corresponding RLC receiving entity.

In an optional embodiment, the establishing the RLC receiving entity through the RLC layer includes one or a combination of the following actions:
establishing the RLC receiving entity through the RLC layer;
initializing a state variable of the RLC receiving entity through the RLC layer; and
completing receiving of the transmission message through the RLC layer.

In an optional embodiment, the processor 1501 is specifically configured to:
establish the PDCP receiving entity through the PDCP layer in the case of determining that the transmission message meets a PDCP set condition through the PDCP layer; and
send the transmission message to a high layer through the PDCP layer; the high layer being an application layer or a V2X layer;
the PDCP set condition including one or a combination of the following conditions:
   the transmission message being a unicast message;
   an LCID of the transmission message being 0 or 1 or 2;
   the transmission message being a first transmission message between the new layer-2 unicast connection address used by the first terminal and a layer-2 unicast connection address of the second terminal; and
   the transmission message having no corresponding PDCP receiving entity.

In an optional embodiment, the establishing the PDCP receiving entity through the PDCP layer includes one or a combination of the following actions:
establishing the PDCP receiving entity through the PDCP layer;
initializing a state variable of the PDCP receiving entity through the PDCP layer; and
completing receiving of the transmission message through the PDCP layer.

In an optional embodiment, the processor 1501 is specifically configured to:
process the transmission message as the message of the broadcast type or the multicast type in the case of determining through the MAC layer that the transmission message is the PC5-S message of the unicast type that is sent by the new terminal, establish the logical channel through the MAC layer, and send indication information to an RRC layer; and
establish the PDCP receiving entity and the RLC receiving entity through the RRC layer based on the indication information.

In an optional embodiment, the processor 1501 is further configured to:
set a propagation type of the PC5-S message to be the broadcast type or the multicast type through the RRC layer in the case that a message sending request indicates to send the PC5-S message of the unicast type to the first terminal after the RRC layer receives the message sending request of the high layer; the high layer being the application layer or the V2X layer.

In an optional embodiment, the processor 1501 is further configured to:
establish a PDCP sending entity, a PDCP receiving entity, an RLC sending entity, an RLC receiving entity, a sending logical channel and a receiving logical channel through the RRC layer in the case that a message sending request indicates to send the PC5-S message of the unicast type to the first terminal after the RRC layer receives the message sending request of the high layer.

Based on the same inventive concept, an embodiment of the present disclosure provides a computer-readable storage medium, instructions in the storage medium, when performed by a processor, enable the processor to perform any communication method implemented in the above embodiments.

Those skilled in the art should understand that the embodiments of the present disclosure may be provided as a method, system, or computer program product. Thus, the present disclosure may be in a form of a complete hardware embodiment, complete software embodiment or software and hardware combined embodiment. Besides, the present disclosure may adopt a form of a computer program product implemented on one or more computer applicable storage media (including but not limited to a disk memory, a CD-ROM, an optical memory and the like) including a computer applicable program code.

The present disclosure is described with reference to flowcharts and/or block diagrams of the method, the device (system), and the computer program product according to the present disclosure. It is to be understood that each flow and/or block in the flowcharts and/or block diagrams as well as a combination of flows and/or blocks in the flowcharts and/or block diagrams may be implemented through computer program instructions. These computer program instructions may be provided for a processor of a general-purpose computer, a special-purpose computer, an embedded processor or another programmable data processing device so as to generate a machine, so that an apparatus for implementing functions specified in one or more flows in the flowcharts and/or one or more blocks in the block diagrams is generated through instructions executed by the processor of the computer or another programmable data processing device.

These computer program instructions may also be stored in a computer-readable memory capable of guiding a computer or another programmable data processing device to work in a specific mode, so that the instructions stored in the computer-readable memory generate a manufacture including an instruction apparatus, and the instruction apparatus implements the functions specified in one or more flows in the flowcharts and/or one or more blocks in the block diagrams.

These computer program instructions may also be loaded to a computer, another programmable data processing device, so that a series of operating steps may be performed on the computer or another programmable device to produce computer-implemented processing, such that the instructions executed on the computer or the another programmable device provide steps for implementing the functions specified in one or more flows in the flowcharts and/or one or more blocks in the block diagrams.

Apparently, those skilled in the art can make various modifications and variations to the present disclosure without departing from the spirit and scope of the present disclosure. In this case, if these modifications and variations of the present disclosure fall within the scope of the claims of the present disclosure and their equivalents, the present disclosure is also intended to include these modifications and variations.

## Claims

1. A communication method, applied to a first terminal and comprising:
determining a first PC5-S message of a unicast type sent to a second terminal;
setting a propagation type of the PC5-S message to be a broadcast type or a multicast type in a case that the propagation type of the PC5-S message is a unicast message; and
sending the PC5-S message.

2. The method according to claim 1, wherein the setting a propagation type of the PC5-S message to be a broadcast type or a multicast type, comprises:
indicating the propagation type of the PC5-S message to be the broadcast type or the multicast type by a high layer; the high layer being an application layer or a vehicle to everything, V2X layer; and
setting an information type in a sidelink control information, SCI domain corresponding to the PC5-S message to be the broadcast type or the multicast type through a medium access control, MAC layer based on an indication of the high layer.

3. The method according to claim 1, wherein the setting a propagation type of a to-be-sent message to be a broadcast type or a multicast type comprises:
setting the propagation type of the PC5-S message to be the broadcast type or the multicast type through a radio resource control, RRC layer in a case that the RRC layer receives a message sending request of a high layer; the message sending request indicating to send the PC5-S message to the second terminal; and the high layer being an application layer or a V2X layer.

4. The method according to claim 3, further comprising:
establishing a packet data convergence protocol, PDCP sending entity, a PDCP receiving entity, a radio link control, RLC sending entity, an RLC receiving entity, a sending logical channel and a receiving logical channel through the RRC layer after the RRC layer receives the message sending request of the high layer.

5. The method according to claim 1, wherein the first PC5-S message of the unicast type comprises a PC5-S message sent by the first terminal to the second terminal for the first time by using a new layer-2 unicast connection address; the PC5-S message being sidelink establishment request information, sidelink authentication request information or sidelink security mode control command information.

6. A communication method, applied to a second terminal and comprising:
receiving a transmission message sent by a first terminal; and
sending an MAC PDU obtained after decoding the transmission message to disassembling and demultiplexing entities through an MAC layer and to an RLC layer in a case of determining that the transmission message meets following conditions;
wherein the conditions comprise:
the transmission message being a unicast message;
the transmission message being a PC5-S message;
the transmission message being a message that is sent by the first terminal to the second terminal for the first time.

7. The method according to claim 6, wherein the transmission message is determined as the PC5-S message through a following manner:
determining that the transmission message is the PC5-S message in a case that a logical channel ID of the transmission message is 0 or 1 or 2.

8. The method according to claim 6, wherein the transmission message is determined as the message that is sent by the first terminal to the second terminal for the first time through a following manner:
determining that the transmission message is the message that is sent by the first terminal to the second terminal for the first time in a case that an ID of the first terminal is not saved in the second terminal, and/or, the second terminal does not receive a message sent by the first terminal within a set time.

9. The method according to claim 6, wherein the conditions further comprise:
a destination address ID of the transmission message being the same as an address ID of the second terminal.

10. The method according to claim 6, further comprising:
establishing an RLC receiving entity in a case that the transmission message has no corresponding RLC receiving entity, and sending the transmission message to a PDCP layer through the RLC layer.

11. The method according to claim 10, wherein the establishing an RLC receiving entity comprises one or a combination of following actions:
establishing the RLC receiving entity through the RLC layer;
initializing a state variable of the RLC receiving entity through the RLC layer; or
completing receiving of the transmission message through the RLC layer.

12. The method according to claim 10 or 11, further comprising:
establishing a PDCP receiving entity in a case that the transmission message has no corresponding PDCP receiving entity.

13. The method according to claim 12, wherein the establishing a PDCP receiving entity comprises one or a combination of following actions:
establishing the PDCP receiving entity through the PDCP layer;
initializing a state variable of the PDCP receiving entity through the PDCP layer; or
completing receiving of the transmission message through the PDCP layer.

14. The method according to claim 12, further comprising:
sending the transmission message to a high layer through the PDCP layer; the high layer being an application layer or a V2X layer.

15. A terminal, wherein the terminal is a first terminal and comprises:
a first setting unit configure to determine a first PC5-S message of a unicast type sent to a second terminal; and setting a propagation type of the PC5-S message to be a broadcast type or a multicast type in a case that the propagation type of the PC5-S message is a unicast message; and
a sending unit configured to send the PC5-S message.

16. A terminal, wherein the terminal is a first terminal and comprises: a memory, a transceiver and a processor;
the memory is configured to store computer instructions;
the transceiver is configured to transceive data under control of the processor; and
the processor is configured to read the computer instructions in the memory and perform following steps:
determining a first PC5-S message of a unicast type sent to a second terminal;
setting a propagation type of the PC5-S message to be a broadcast type or a multicast type in a case that the propagation type of the PC5-S message is a unicast message; and
sending the PC5-S message.

17. The terminal according to claim 16, wherein the processor is configured to:
indicate the propagation type of the PC5-S message to be the broadcast type or the multicast type by a high layer; the high layer being an application layer or a V2X layer; and
set an information type in a sidelink control information, SCI domain corresponding to the PC5-S message to be the broadcast type or the multicast type through an MAC layer based on an indication of the high layer.

18. The terminal according to claim 16, wherein the processor is configured to:
set the propagation type of the PC5-S message to be the broadcast type or the multicast type through an RRC layer in a case that the RRC layer receives a message sending request of the high layer; the message sending request indicating to send the PC5-S message to the second terminal; and the high layer being an application layer or a V2X layer.

19. The terminal according to claim 18, wherein the processor is further configured to:
establish a PDCP sending entity, a PDCP receiving entity, an RLC sending entity, an RLC receiving entity, a sending logical channel and a receiving logical channel through the RRC layer after the RRC layer receives the message sending request of the high layer.

20. The terminal according to claim 16, wherein the first PC5-S message of the unicast type comprises a PC5-S message sent by the first terminal to the second terminal for the first time by using a new layer-2 unicast connection address; the PC5-S message being sidelink establishment request information, sidelink authentication request information or sidelink security mode control command information.

21. A terminal, wherein the terminal is a second terminal and comprises:
a receiving unit configured to receive a transmission message sent by a first terminal; and
an establishment unit configured to send an MAC PDU obtained after decoding the transmission message to disassembling and demultiplexing entities through an MAC layer and to an RLC layer in a case of determining that the transmission message meets following conditions;
wherein the conditions comprise:
the transmission message being a unicast message;
the transmission message being a PC5-S message;
the transmission message being a message that is sent by the first terminal to the second terminal for the first time.

22. A terminal, wherein the terminal is a second terminal and comprises: a memory, a transceiver and a processor;
the memory is configured to store computer instructions;
the transceiver is configured to transceive data under control of the processor; and
the processor is configured to read the computer instructions in the memory and perform following steps:
receiving a transmission message sent by a first terminal; and
sending an MAC PDU obtained after decoding the transmission message to disassembling and demultiplexing entities through an MAC layer and to an RLC layer in a case of determining that the transmission message meets following conditions;
wherein the conditions comprise:
the transmission message being a unicast message;
the transmission message being a PC5-S message;
the transmission message being a message that is sent by the first terminal to the second terminal for the first time.

23. The terminal according to claim 22, wherein the processor determines the transmission message as the PC5-S message through a following manner:
determining that the transmission message is the PC5-S message in a case that a logical channel ID of the transmission message is 0 or 1 or 2.

24. The terminal according to claim 22, wherein the processor determines the transmission message as the message that is sent by the first terminal to the second terminal for the first time through a following manner:
determining that the transmission message is the message that is sent by the first terminal to the second terminal for the first time in the case that an ID of the first terminal is not saved in the second terminal, and/or, the second terminal does not receive a message sent by the first terminal within set time.

25. The terminal according to claim 22, wherein the conditions further comprise:
a destination address ID of the transmission message being the same as an address ID of the second terminal.

26. The terminal according to claim 22, wherein the processor is further configured to:
establish an RLC receiving entity in a case that the transmission message has no corresponding RLC receiving entity, and send the transmission message to a PDCP layer through the RLC layer.

27. The terminal according to claim 26, wherein the processor is configured to establish an RLC receiving entity through one or a combination of following actions:
establishing the RLC receiving entity through the RLC layer;
initializing a state variable of the RLC receiving entity through the RLC layer; or
completing receiving of the transmission message through the RLC layer.

28. The terminal according to claim 26 or 27, wherein the processor is further configured to:
establish a PDCP receiving entity in the case a the transmission message has no corresponding PDCP receiving entity.

29. The terminal according to claim 28, wherein the processor is configured to establish a PDCP receiving entity through one or a combination of following actions:
establishing the PDCP receiving entity through the PDCP layer;
initializing a state variable of the PDCP receiving entity through the PDCP layer; or
completing receiving of the transmission message through the PDCP layer.

30. The terminal according to claim 28, wherein the processor is further configured to:
send the transmission message to a high layer through the PDCP layer; the high layer being an application layer or a V2X layer.

31. A computer-readable storage medium, wherein the storage medium stores computer instructions, the computer instructions, when performed by a processor, implementing the method according to any one of claims 1 to 14.
